# EUROPEAN PATENT APPLICATION

(11) **EP 1 471 462 A1**
(43) Date of publication of application: **27.10.2004**
(21) Application number: 03024956.9
(22) Date of filing: 29.10.2003
(51) Int. Cl.: G06T 5/00

(54) **Method for processing a facial region of an image differently than the remaining portion of the image**

(30) Priority: 21.04.2003 US 420677
(71) Applicant: Hewlett-Packard Development Company, L.P., Houston, Texas 77070 (US)
(72) Inventor: Schramm, Morgan, Portland OR 97214 (US); Gondek, Jay, Camas WA 98607 (US); Berge, Thomas G., Camas WA 98607 (US)
(74) Representative: Schoppe, Fritz, Dipl.-Ing.

(57) **Abstract**

A method (300) for processing a human facial region of an image differently than the remaining portion of the image. The method includes determining (302) whether a human facial region exists within an image. If the human facial region exists within the image, the method also includes determining (304) the location of the human facial region within the image. Additionally, the method includes processing (306) the human facial region differently in terms of spatial image enhancement than the remaining portion of the image.

## Description

### BACKGROUND

Computers may be utilized to process and subsequently print out digital images. Generally, a computer may receive one or more digital images, for example, from another computer, a digital camera or an image scanner. Once the digital image is received, a computer user may desire to have it printed out on some type of paper. As such, the user causes an application operating on the computer to transfer the data associated with the desired image to a print driver that also operates on the computer. The print driver software may then process the digital image data with an image sharpening algorithm to enhance its visual quality and also convert it into an acceptable format for the printer associated with the printer driver. Subsequently, the printer driver transfers the sharpened and formatted image data to the printer which eventually prints the image onto one or more pieces of paper for the user. However, there are some disadvantages associated with this print driver technique.

For example, the print driver technique described above typically produces better looking images, but sometimes it can have a deleterious effect on human facial regions of an image. Specifically, when the image data is sharpened, it can create artifacts in the human facial regions of the image. For example, when natural ridges, wrinkles, and clefts of facial regions are sharpened, it can result in artificially "aging" the face of the person(s) within the digital image. These artifacts may be particularly noxious since facial regions are generally the focus of images that contain them, and individuals are very sensitive to poor reproduction of faces.

For these and other reasons, there is a need for the present invention.

### SUMMARY OF THE INVENTION

A method for processing a human facial region of an image differently than the remaining portion of the image. The method includes determining whether a human facial region exists within an image. If the human facial region exists within the image, the method also includes determining the location of the human facial region within the image. Additionally, the method includes processing the human facial region differently in terms of spatial image enhancement than the remaining portion of the image.

### BRIEF DESCRIPTION OF THE DRAWINGS

Figure 1 is a flowchart of steps performed in accordance with an embodiment of the present invention for processing a human facial region of an image differently than the remaining portion of the image.
Figure 2A is a diagram illustrating an exemplary image that may be received for processing in accordance with an embodiment of the present invention.
Figure 2B is a diagram illustrating the adverse effects of applying a typical image sharpening algorithm to the image of Figure 2A.
Figure 2C is a diagram illustrating the positive effects of processing the image of Figure 2A in accordance with an embodiment of the present invention.
Figure 3 is a flowchart of steps performed in accordance with another embodiment of the present invention for processing a human facial region of an image differently than the remaining portion of the image.
Figure 4 is a diagram of an exemplary facial image enhancement dialog box that may be utilized in accordance with embodiments of the present invention.
Figure 5 is a block diagram of an exemplary network that may be utilized in accordance with embodiments of the present invention.
Figure 6 is a block diagram of an exemplary computer system that may be used in accordance with embodiments of the present invention.

### DESCRIPTION OF THE PREFERRED EMBODIMENTS

Reference will now be made in detail to embodiments of the invention, examples of which are illustrated in the accompanying drawings. While the invention will be described in conjunction with embodiments, it will be understood that they are not intended to limit the invention to these embodiments. On the contrary, the invention is intended to cover alternatives, modifications and equivalents, which may be included within the scope of the invention as defined by the appended claims. Furthermore, in the following detailed description of the present invention, numerous specific details are set forth in order to provide a thorough understanding of the present invention. However, it will be evident to one of ordinary skill in the art that the present invention may be practiced without these specific details. In other instances, well known methods, procedures, components, and circuits have not been described in detail so as not to unnecessarily obscure aspects of the present invention.

### NOTATION AND NOMENCLATURE

Some portions of the detailed descriptions which follow are presented in terms of procedures, logic blocks, processing, and other symbolic representations of operations on data bits within a computing system or digital system memory. These descriptions and representations are the means used by those skilled in the data processing arts to most effectively convey the substance of their work to others skilled in the art. A procedure, logic block, process, etc., is herein, and generally, conceived to be a self-consistent sequence of steps or instructions leading to a desired result. The steps may involve physical manipulations of physical quantities. Usually, though not necessarily, these physical manipulations take the form of electrical or magnetic signals capable of being stored, transferred, combined, compared, and otherwise manipulated in a computing system or similar electronic computing device. For reasons of convenience, and with reference to common usage, these signals are referred to as bits, values, elements, symbols, characters, terms, numbers, or the like with reference to the present Invention.

It should be borne in mind, however, that all of these terms are to be interpreted as referencing physical manipulations and quantities and are merely convenient labels and are to be interpreted further in view of terms commonly used in the art. Unless specifically stated otherwise as apparent from the following discussions, it is understood that throughout discussions of the present invention, discussions utilizing terms such as "determining" or "processing" or "performing" or "deciding" or "ascertaining" or "transmitting" or "receiving" or "providing" or "recognizing" or "generating" or "utilizing" or "storing" or the like, refer to the action and processes of a computing system, or similar electronic computing device, that manipulates and transforms data. The data is represented as physical (electronic) quantities within the computing system's registers and memories and is transformed into other data similarly represented as physical quantities within the computing system's memories or registers or other such information storage, transmission, or display devices.

### EXEMPLARY OPERATIONS IN ACCORDANCE WITH THE PRESENT INVENTION

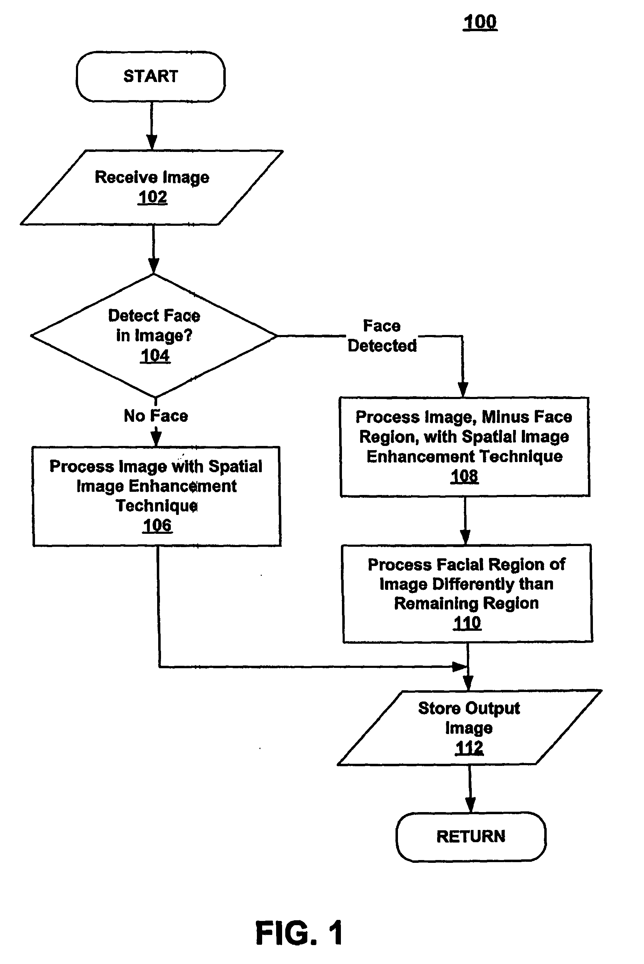

Figure 1 is a flowchart 100 of steps performed in accordance with an embodiment of the present invention for processing a human facial region(s) of an image differently than the remaining region of the image. Flowchart 100 indudes processes which, in some embodiments, are carried out by a processor(s) and electrical components under the control of computer readable and computer executable instructions. The computer readable and computer executable instructions may reside, for example, in data storage features such as computer usable volatile memory, computer usable non-volatile memory and/or computer usable mass data storage. However, the computer readable and computer executable instructions may reside in any type of computer readable medium. Although specific steps are disclosed in flowchart 100, such steps are exemplary. That is, the present embodiment is well suited to performing various other steps or variations of the steps recited in Figure 1. Within the present embodiment, it should be appreciated that the steps of flowchart 100 may be performed by software, by hardware or by any combination of software and hardware.

The present embodiment provides a method for processing a human facial region of an image differently in terms of spatial image enhancement than the remaining region of the image. For example, when an image is received, a determination is made as to whether any human face exists within the image. If not, the entire image may be processed with one or more spatial image enhancement techniques in order to improve its visual quality. However, if there is one or more human faces present within the image, the image is processed in a different manner. Specifically, the region(s) that defines a human face(s) within the image is processed differently in terms of spatial image enhancement than the portion of the image that resides outside of the facial region(s). In this fashion, any human face within the image may be specifically handled in a manner that provides a more pleasing or attractive reproduction of the human facial region.

At step 102 of Figure 1, an image (e.g., a digital image) is received in order to be processed by flowchart 100. It is noted that there are a wide variety of reasons for receiving an image at step 102 to be processed. For example, the image may be received at step 102 in order to subsequently view it on a display device or for it to be printed out by a printer, just to name a few. Furthermore, the image may be received at step 102 in diverse ways in accordance with the present embodiment. For example, the image may be received from an image scanner and/or a digital camera coupled to a computing device. Additionally, the image may be received at step 102 by software and/or hardware associated with a printer (e.g., printer driver), digital camera, scanner, computer or any other image processing system. The flowchart 100 is capable of operating with any image processing system.

In step 104, the present embodiment determines whether a human face(s) is present within the received image. If it is determined that there are not any human faces present within the image, the present embodiment proceeds to step 106. However, if it is determined that there is one or more human faces present within the image, the present embodiment proceeds to step 108. It is understood that step 104 may be implemented in diverse ways. For example, a Neural Network-Base Face Detection algorithm, the Jones Viola Algorithm, and/or any other face detection technique may be utilized in order to perform the functionality of step 104. It is noted that if a human face(s) is located within the image, its location (or position) within the image may then be determined. The location of the human face(s) may be contained within a bounding box, a binary mask, or some type of defined facial region.

At step 106 at Figure 1, the entire image is processed with one or more spatial image enhancement techniques in order to improve the visual quality of the image. It is noted that there are diverse spatial image enhancement techniques that may be implemented at step 106. For example, the spatial image enhancement technique may include, but is not limited to, an image sharpening algorithm, an image smoothing algorithm, a variable image sharpening and smoothing algorithm, and/or the like.

In step 108, the image is processed, minus the human facial region(s), with one or more spatial image enhancement techniques in order to improve its visual quality. It is appreciated that the location of the human face(s) within the image is utilized in order to define the remaining portion of the image to process at step 108. There are a wide variety of spatial image enhancement techniques that may be implemented at step 108. For example, the spatial image enhancement technique may indude, but is not limited to, an image sharpening algorithm, an image smoothing algorithm, a variable image sharpening and smoothing algorithm, and/or the like. It is noted that any region that defines a human face (or some portion of a facial region) within the image is not processed with any type of spatial image enhancement technique at step 108.

At step 110 of Figure 1, the locations defining the human face(s), or some portion of the human face(s), is utilized to process the human facial region(s) of the image differently in terms of spatial image enhancement than the way the region outside of the facial region(s) were processed at step 108. For example, the processing of the human facial region(s) may include, but is not limited to, restricting the amount of sharpening done, not utilizing any spatial image enhancement technique, utilizing a smoothing technique, utilizing any facial enhancement technique, smoothly varying the amount of processing in order to limit the visible discontinuity at the edge of the bounding box(es) containing the human face(s), reducing the amount of smoothing and sharpening done, or any other spatial enhancement technique that is different from the spatial image enhancement technique(s) utilized for processing at step 108 the portion of the image outside of the facial region(s). It is noted that at least some portion, but perhaps not all, of the human facial region(s) of the image may be subjected to the functionality of step 110.

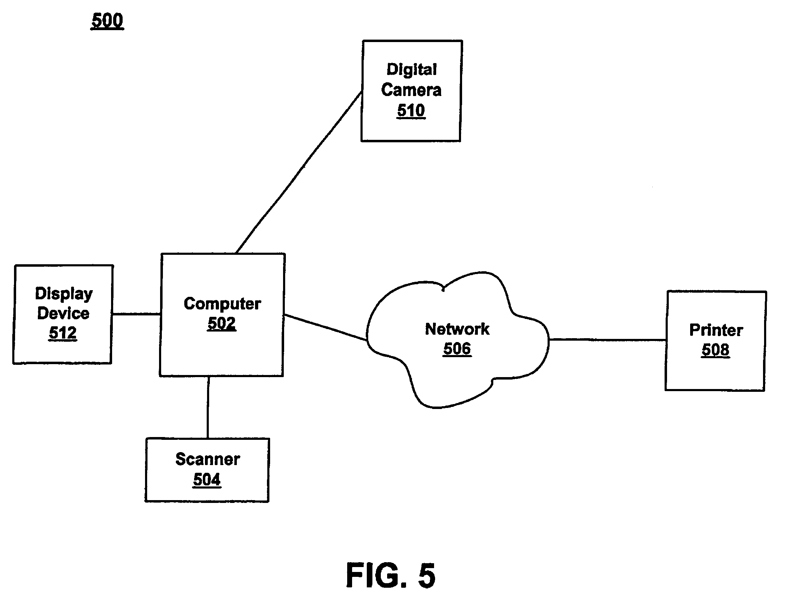

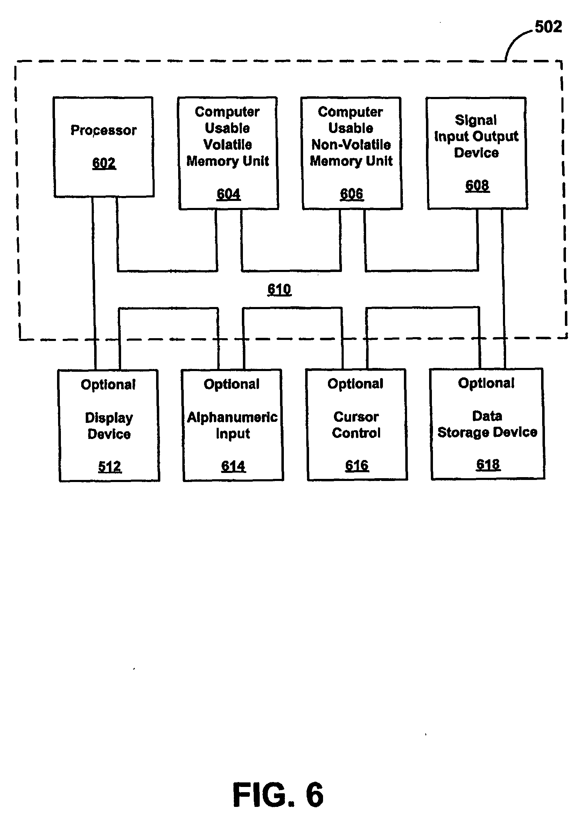

In step 112, the data associated with the resulting output image may be stored utilizing any type of memory device. It is appreciated that the memory device utilized at step 112 may include, but is not limited to, random access memory (RAM), static RAM, dynamic RAM, read only memory (ROM), programmable ROM, flash memory, erasable programmable read only memory (EPROM), electrically erasable programmable read only memory (EEPROM), disk drive (e.g., hard disk drive), diskette, and/or magnetic or optical disk (e.g., CD, DVD, and the like). It is noted that once the output image is stored, it may be utilized for other functions such as being printed out by a printer (e.g., 508 of Figure 5), displayed on a display screen (e.g., 512 of Figures 5 and 6), and the like. Once step 112 is completed, the present embodiment exits flowchart 100.

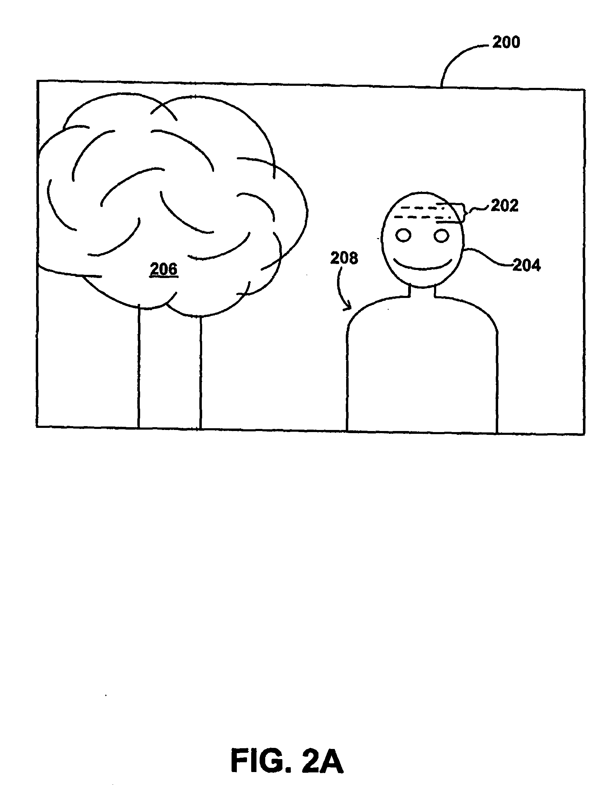

Figure 2A is a diagram illustrating an exemplary image 200 (e.g., photograph, picture, etc.) that may be received for processing in accordance with an embodiment of the present invention. For example, image 200 may be received by a computer via an image scanner. As such, image 200 may then be processed by an embodiment (e.g., flowchart 100 or flowchart 300) of the present invention for it to be, for example, printed out by a printer or displayed on a display screen. It is noted that image 200 includes a tree 206 along with a person 208 having a facial region 204. Additionally, the facial region 204 of the person 208 includes light forehead wrinkles 202 which are represented as dashed lines.

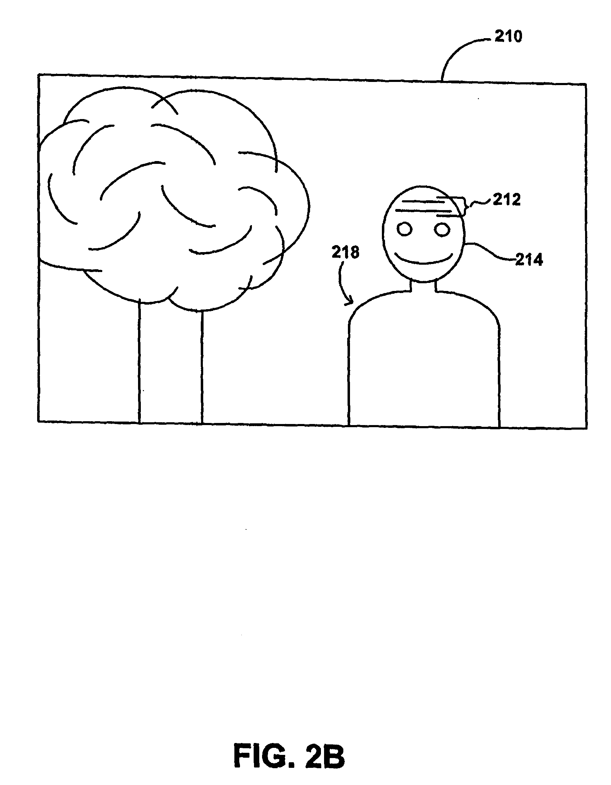

Figure 2B is a diagram illustrating the adverse effects of applying a typical image sharpening algorithm to the image 200 of Figure 2A. Specifically, image 210 of Figure 2B represents a reproduction of image 200 after being processed with a typical image sharpening algorithm. As shown, when the data associated with image 200 is sharpened, it can have deleterious affects on the resulting human facial region 214. For example, facial region 214 includes more defined forehead wrinkles 212 which are represented as solid lines. Therefore, these defined forehead wrinkles 212 can artificially "age" the face depicted in facial region 214 of person 218 within image 210. These type of artifacts are particularly undesirable since facial regions (e.g. 214) are generally the focus of images that contain them, and individuals are very sensitive to poor reproduction of faces.

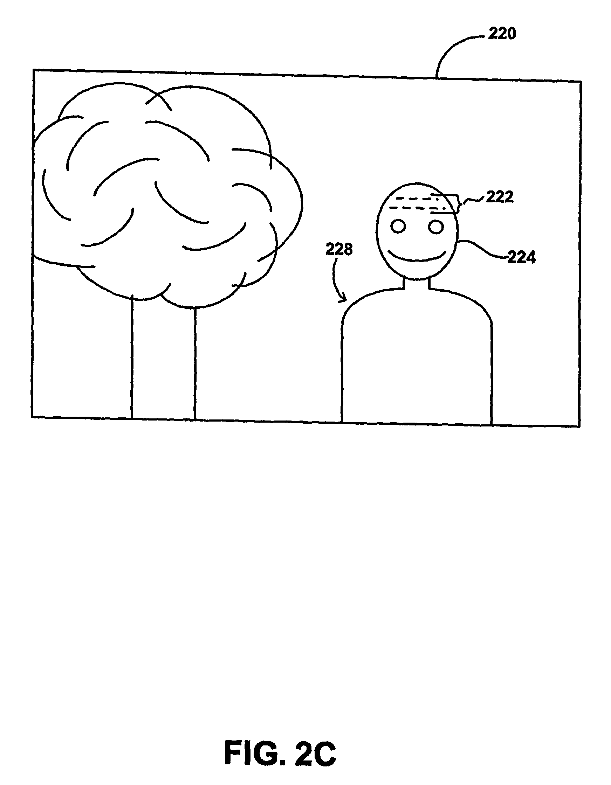

However, Figure 2C is a diagram illustrating the positive effects of processing the image 200 of Figure 2A in accordance with an embodiment of the present invention. Specifically, image 220 of Figure 2C represents a reproduction of image 200 after being processed by an embodiment in accordance with the present invention (e.g., flowchart 100 or flowchart 300). As shown, when the data associated with the human facial region 204 is processed differently in terms of spatial image enhancement than the remaining data associated with image 200, a more pleasing or attractive reproduction of the human facial region 224 results within image 220. For example, the facial region 224 of person 228 includes light forehead wrinkles 222 (represented as dashed lines) instead of the more defined forehead wrinkles 212 shown within Figure 2B and described herein. As such, the processing of an image in accordance with an embodiment of the present invention produces more pleasing and/or attractive reproductions of facial regions within images along with improving the visual quality of the non-facial regions of the images.

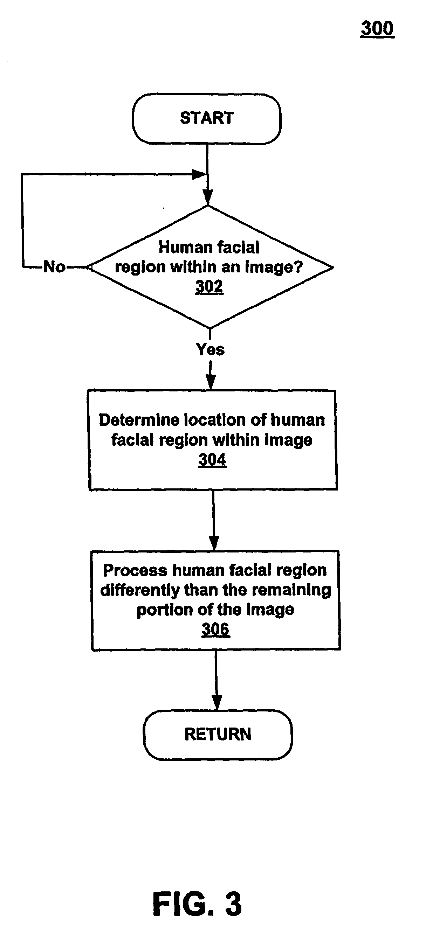

Figure 3 is a flowchart 300 of steps performed in accordance with another embodiment of the present invention for processing a human facial region(s) of an image differently than the remaining portion of the image. Flowchart 300 includes processes which, in some embodiments, are carried out by a processor(s) and electrical components under the control of computer readable and computer executable instructions. The computer readable and computer executable instructions may reside, for example, in data storage features such as computer usable volatile memory, computer usable non-volatile memory and/or computer usable mass data storage. However, the computer readable and computer executable instructions may reside in any type of computer readable medium. Although specific steps are disclosed in flowchart 300, such steps are exemplary. That is, the present embodiment is well suited to performing various other steps or variations of the steps recited in Figure 3. Within the present embodiment, it should be appreciated that the steps of flowchart 300 may be performed by software, by hardware or by any combination of software and hardware.

The present embodiment provides a method for processing one or more human facial regions of an image differently in terms of spatial image enhancement than the portion of the image located outside of the facial regions. For example, a determination is made as to whether any human facial regions exist within the image. If there are one or more human facial regions present within the image, the location of each human facial regions is determined. As such, the regions that define human faces within the image are processed differently in terms of spatial image enhancement than the portion of the image that resides outside of the facial regions. Therefore, any human face within the image may be specifically handled in a manner that provides a more attractive, pleasing and/or accurate reproduction of the human facial region.

It is noted that the functionality of flowchart 300 may be implemented with, but is not limited to, software and/or hardware associated with a printer (e.g., printer driver), digital camera, scanner, computer or any other image processing system.

At step 302, the present embodiment determines whether there is a human facial region(s) within an image. If it is determined that there is not a human facial region(s) within the image, the present embodiment proceeds to the beginning of step 302. However, if it is determined that there is a human facial region(s) within the image, the present embodiment proceeds to step 304. It is appreciated that step 302 may be implemented in a wide variety of ways. For example, the Jones Viola Algorithm, a Neural Network-Base Face Detection algorithm, and/or any other face detection technique may be utilized in order to perform the functionality at step 302.

In step 304 of Figure 3, the present embodiment determines the location(s), or position(s), of the human facial region(s) within the image. The location(s) of the human facial region(s) may be contained within a bounding box(es), a binary mask(s), or some type of defined facial region(s) at step 304. It is noted that at least some portion, but perhaps not all, of the human facial region(s) within the image may be defined at step 304. It is understood that step 304 may be implemented in diverse ways. For example, the Jones Viola Algorithm and/or a Neural Network-Base Face Detection algorithm may be utilized to implement the functionality at step 304.

At step 306, the location(s) of the human facial region(s) are utilized in order to automatically process that region(s) differently in terms of spatial image enhancement than the remaining portion of the image located outside of the facial region(s). For example, the automatic processing at step 306 of the human facial region(s) may include, but is not limited to, restricting the amount of sharpening done, not utilizing any spatial image enhancement technique, utilizing a smoothing technique, utilizing any facial enhancement technique, smoothly varying the amount of processing in order to limit the visible discontinuity at the edge of the bounding box(es) containing the human face(s), reducing the amount of smoothing and sharpening done, and/or any other spatial enhancement technique that is different from the spatial image enhancement technique(s) utilized for automatically processing the portion of the image outside of the facial region(s). It is understood that at least some portion, perhaps not all, of the human facial region(s) of the image may be subjected to the functionality of step 306. Once step 306 is completed, the present embodiment exits flowchart 300.

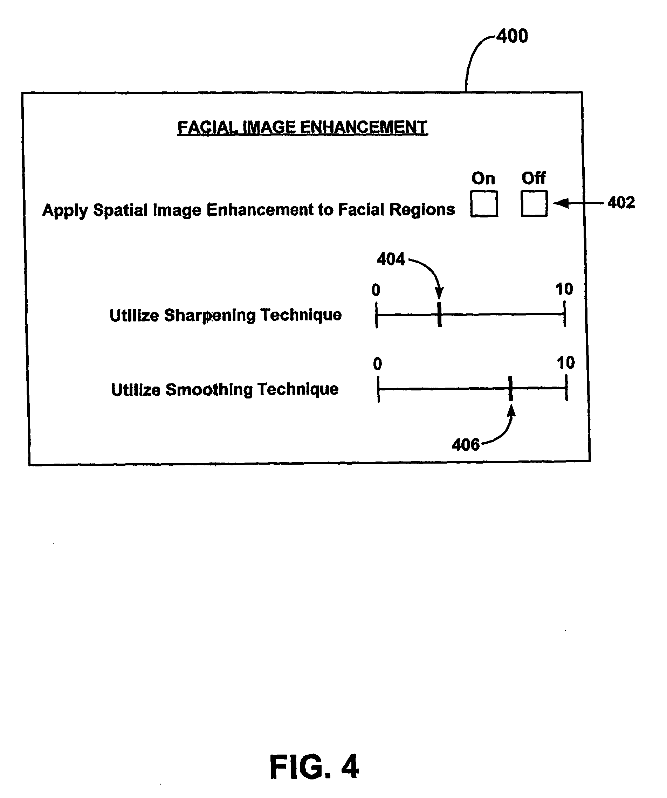

Figure 4 is a diagram of an exemplary facial image enhancement dialog box 400 that may be utilized in accordance with embodiments of the present invention. It is appreciated that the facial image enhancement dialog box 400 may be implemented as, but is not limited to, a graphical user interface (GUI). The facial image enhancement dialog box 400 may be utilized in conjunction with a method (e.g., flowchart 100 and/or 300) for processing a human facial region(s) of an image differently in terms of spatial image enhancement than the portion of the image located outside of the facial region(s).

Specifically, the facial image enhancement dialog box 400 enables a user to specifically tailor the manner in which spatial image enhancement is performed with relation to any human facial regions that exist within an image. For example, the facial image enhancement dialog box 400 provides its user at line 402 the ability to turn on or off the application of spatial image enhancement for facial regions of an image. Furthermore, if the user chooses to have spatial image enhancement applied to the facial regions by selecting the "On" box at line 402, the user is then able to adjust the parameters of specific spatial image enhancement techniques. For example, the user may utilize slider 404 in order to increase or decrease the amount of image sharpening technique applied to the facial regions of the image. Additionally, the user may utilize slider 406 in order to increase or decrease the amount of image smoothing technique applied to the facial regions of the image.

It is noted that other spatial image enhancement techniques may be incorporated as part of facial image enhancement dialog box 400 of Figure 4. In this manner, the facial image enhancement dialog box 400 provides its user even more options for specifically controlling the spatial image enhancement of the facial regions of the image. It is appreciated that the facial image enhancement dialog box 400 may be an optional feature that provides users the ability to personalize the spatial image enhancement associated with any facial regions of the image.

### EXEMPLARY NETWORK IN ACCORDANCE WITH THE PRESENT INVENTION

Figure 5 is a block diagram of an exemplary network 500 that may be utilized in accordance with embodiments of the present invention. Within networking environment 500 a computer 502 may be coupled to, but not limited to, a digital camera 510, an image scanner 504, a display device 512 and a printer 508. Specifically, the computer 502 and the printer 508 are communicatively coupled to network 506. It is appreciated that computer 502 and printer 508 may be communicatively coupled to network 506 via wired and/or wireless communication technologies. In this manner, computer 502 is capacitated to transmit digital images to printer 508 via network 506 for printing.

The network 506 of networking environment 500 may be implemented in a wide variety of ways in accordance with the present embodiment. For example, network 506 may be implemented as, but is not limited to, a local area network (LAN), a metropolitan area network (MAN), a wide area network (WAN) and/or the Intemet. It is noted that networking environment 500 is well suited to be implemented without network 506. As such, computer 502 may be communicatively coupled to printer 508 via wired and/or wireless communication technologies. As such, computer 502 is able to transmit digital images to printer 508 to be printed.

Within Figure 5, the digital camera 510 and image scanner 504 may be communicatively coupled to computer 502. It is understood that the digital camera 510 and scanner 504 may be communicatively coupled to computer 502 via wired and/or wireless communication technologies. In this fashion, the digital camera 510 and the image scanner 504 are able to transmit digital images to the computer 502. Subsequently, the digital images may be output by computer 502 to be seen on display device 512 by a viewer. Furthermore, the digital images may be output by computer 502 to printer 508 via network 506 to subsequently be printed.

### EXEMPLARY HARDWARE IN ACCORDANCE WITH THE PRESENT INVENTION

Figure 6 is a block diagram of an exemplary computer system 502 that may be used in accordance with embodiments of the present invention. It is understood that system 502 is not strictly limited to be a computer system. As such, system 502 of the present embodiment is well suited to be any type of computing device (e.g., server computer, desktop computer, laptop computer, portable computing device, etc.). Within the discussions of the present invention herein, certain processes and steps were discussed that may be realized, In one embodiment, as a series of instructions (e.g., software program) that reside within computer readable memory units of computer system 502 and executed by a processor(s) of system 502. When executed, the instructions cause computer 502 to perform specific actions and exhibit specific behavior which is described herein.

Computer system 502 of Figure 6 comprises an address/data bus 610 for communicating information, one or more central processors 602 coupled with bus 610 for processing information and instructions. Central processor unit(s) 602 may be a microprocessor or any other type of processor. The computer 502 also includes data storage features such as a computer usable volatile memory unit 604, e.g., random access memory (RAM), static RAM, dynamic RAM, etc., coupled with bus 610 for storing information and instructions for central processor(s) 602, a computer usable non-volatile memory unit 606, e.g., read only memory (ROM), programmable ROM, flash memory, erasable programmable read only memory (EPROM), electrically erasable programmable read only memory (EEPROM), etc., coupled with bus 610 for storing static information and instructions for processor(s) 602.

System 502 also includes one or more signal generating and receiving devices 608 coupled with bus 610 for enabling system 502 to interface with other electronic devices. The communication interface(s) 608 of the present embodiment may include wired and/or wireless communication technology. For example, in one embodiment of the present invention, the communication interface 608 is a serial communication port, but could also alternatively be any of a number of well known communication standards and protocols, e.g., a Universal Serial Bus (USB), an Ethernet adapter, a FireWire (IEEE 1394) interface, a parallel port, a small computer system interface (SCSI) bus interface, an infrared (IR) communication port, a Bluetooth wireless communication adapter, a broadband connection, and the like. In another embodiment, a cable or digital subscriber line (DSL) connection may be employed. In such a case the communication interface(s) 608 may Include a cable modem or a DSL modem. Additionally, the communication interface(s) 608 may provide a communication interface to the internet.

Optionally, computer system 502 can include an alphanumeric input device 614 including alphanumeric and function keys coupled to the bus 610 for communicating information and command selections to the central processor(s) 602. The computer 502 can also include an optional cursor control or cursor directing device 616 coupled to the bus 610 for communicating user input information and command selections to the processor(s) 602. The cursor directing device 616 can be implemented using a number of well known devices such as a mouse, a track ball, a track pad, an optical tracking device, a touch screen, etc. Alternatively, it is appreciated that a cursor can be directed and/or activated via input from the alphanumeric input device 614 using special keys and key sequence commands. The present embodiment is also well suited to directing a cursor by other means such as, for example, voice commands.

The system 502 of Figure 6 can also include a computer usable mass data storage device 618 such as a magnetic or optical disk and disk drive (e.g., hard drive or floppy diskette) coupled with bus 610 for storing information and instructions. An optional display device 512 is coupled to bus 610 of system 502 for displaying video and/or graphics. It should be appreciated that optional display device 512 may be a cathode ray tube (CRT), flat panel liquid crystal display (LCD), field emission display (FED), plasma display or any other display device suitable for displaying video and/or graphic images and alphanumeric characters recognizable to a user.

Accordingly, embodiments of the present invention provide a way to enable printer drivers to produce images that indude more pleasing and/or attractive reproductions of human facial regions.

The foregoing descriptions of specific embodiments of the present invention have been presented for purposes of illustration and description. They are not intended to be exhaustive or to limit the invention to the precise forms disclosed, and it is evident many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents.

## Claims

1. A method (300) for processing a human facial region of an image differently than the remaining portion of said image, said method comprising:
determining (302) whether a human facial region exists within an image;
if said human facial region exists within said image, determining (304) the location of said human facial region within said image; and
processing (306) said human facial region differently in terms of spatial image enhancement than the remaining portion of said image.

2. The method as described in Claim 1 wherein said processing said human facial region differently in terms of spatial image enhancement than the remaining portion of said image includes processing said human facial region without a spatial image enhancement technique.

3. The method as described in Claim 1 wherein said processing said human facial region differently in terms of spatial image enhancement than the remaining portion of said image includes utilizing an image sharpening technique with the remaining portion of said image without utilizing said image sharpening technique with said human facial region.

4. The method as described in Claim 1 wherein said processing said human facial region differently in terms of spatial image enhancement than the remaining portion of said image includes utilizing an image smoothing technique on said human facial region and utilizing an image sharpening technique with the remaining portion of said image.

5. The method as described in Claim 1 wherein said processing said human facial region differently in terms of spatial image enhancement than the remaining portion of said image includes utilizing a facial enhancement technique on said human facial region and utilizing another image enhancement technique on the remaining portion of said image.

6. The method as described in Claim 1 wherein said method is performed by a printer driver.

7. The method as described in Claim 1 wherein said method is performed by a digital camera (510).

8. The method as described in Claim 1 wherein said method is performed by a scanner (504).

9. The method as described in Claim 1 wherein said method is performed by a computer (502).

10. The method as described in Claim 1 wherein said image is a digital image.
